# EUROPEAN PATENT APPLICATION

(11) **EP 2 031 828 A2**
(43) Date of publication of application: **04.03.2009**
(21) Application number: 08252649.2
(22) Date of filing: 08.08.2008
(51) Int. Cl.: H04L 29/06

(54) **Content receiving device and method**

(30) Priority: 03.09.2007 JP 2007227677
(71) Applicant: Sony Corporation, Tokyo (JP)
(72) Inventor: Yamagishi, Yasuaki, Tokyo (JP)
(74) Representative: Merryweather, Colin Henry

(57) **Abstract**

A content receiving client device has a metadata obtaining unit, a message generating unit, and a message sending unit. The metadata obtaining unit obtains metadata including information used to generate an invite message for prompting establishment of a session for receiving content from a content distribution server. The message generating unit generates, based on the metadata, the invite message. The invite message includes a destination address field storing location information specifying a location of the content. The invite message further includes a body field storing information used to establish the session. The message sending unit sends the invite message to a session control server that controls the session.

## Description

This application is based upon and claims the benefit of priority to Japanese Patent Application No. 2007-227677, filed on September 3, 2007, the entire contents of which are incorporated herein by reference.

The present invention relates to an Internet Protocol Television (IPTV) client terminal, an SIP-INVITE message generating method, an IPTV system, an IPTV session controlling method, and a computer program for establishing an IPTV session with an IPTV server and viewing content.

IPTV refers to a service of distributing digital television broadcasting programs using Internet Protocol (IP), or a collection of broadcasting technologies for the service. IP Multimedia Subsystem (IMS) is a candidate for the standard of IPTV session control. The standardization of Next Generation Network (NGN) by European Telecommunications Standards Institute (ETSI) or International Telecommunication Union Telecommunication Standardization Sector (ITU-T) is based on IMS. NGN is a next-generation backbone network based on IP technologies.

IMS refers to a multimedia service for cellular phones based on packet communication, or a standard for implementing the service. In IMS, using an IP telephony protocol called Session Initiation Protocol (SIP), it is possible to control a multimedia session securely and to ensure Quality of Service (QoS). That is, in IMS, when an IPTV session is established, using SIP, it is possible to control a session for IPTV streaming by maintaining a secure end-to-end path with ensured QoS.

Parameters used to establish a session (e.g., a parameter for QoS control) may be described in Session Description Protocol (SDP). An SIP-INVITE message storing the SDP in the body field may be exchanged between an IMS-SIP server and a terminal owned by a provider of content and between the IMS-SIP server and a terminal owned by a user who views the content, thereby negotiating parameters for establishing an end-to-end session. Furthermore, a counterparty (e.g., a user) may be specified in SIP Uniform Resource Identifier (SIP-URI) representing the destination of the SIP-INVITE message, so that, through appropriate address resolution (mapping from a name to an address of a terminal), the message is delivered to the terminal of the counterparty and a session is established.

Japanese Patent Application Publication No. 2004-147128 (e.g., paragraph 0046) describes an example of session control based on IMS-SIP. More specifically, in order to establish a session for image communication between image communication apparatuses, an ADSL gateway that has received a sending request packet from an image communication apparatus at the source of the request may send a session requesting message based on the SIP specification (INVITE message) to an SIP proxy of a VolP service provider, and the SIP proxy resolves a destination address described in the header of the session requesting message and sends the session requesting message (INVITE message) to the ADSL gateway at the destination.

In order to use IMS-SIP for controlling an IPTV session, address information that enables address resolution of content to be viewed and a server that provides the content, and SDP describing parameters used to establish an IPTV session for viewing the content are to be stored in a message for establishing a session, such as an SIP-INVITE message.

The message for establishing a session may be created by an IPTV client application 13 based on metadata of content. The following problems may exit regarding the creation of the message.

TV-Anytime metadata is a candidate for the standard metadata format in the standardization of IPTV. TV-Anytime metadata is the metadata standard standardized by ETSI. TV-Anytime metadata is a candidate metadata format of, for example, the IPTV standard for Digital Video Broadcasting (DVB) and the IPTV standard in ITU-T.

However, since the standard of TV-Anytime metadata does not define how to store information used to control an IPTV session over IMS, it is not possible to control an IPTV session over IMS using TV-Anytime metadata.

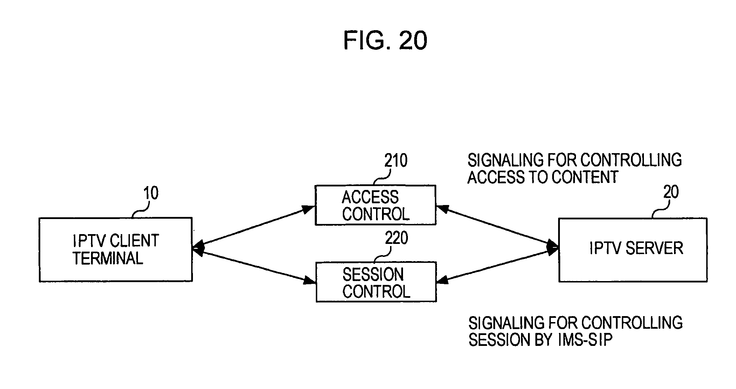

Furthermore, in an ordinary IPTV system, as shown in Fig. 20, before establishing a session for viewing content between an IPTV client terminal 10 and an IPTV server 20, signaling (exchange of messages) for access control 210, i.e., control of access privileges as to which user is allowed to access which content, and signaling for session control 220, i.e., control of establishment of a session for viewing content, are executed separately.

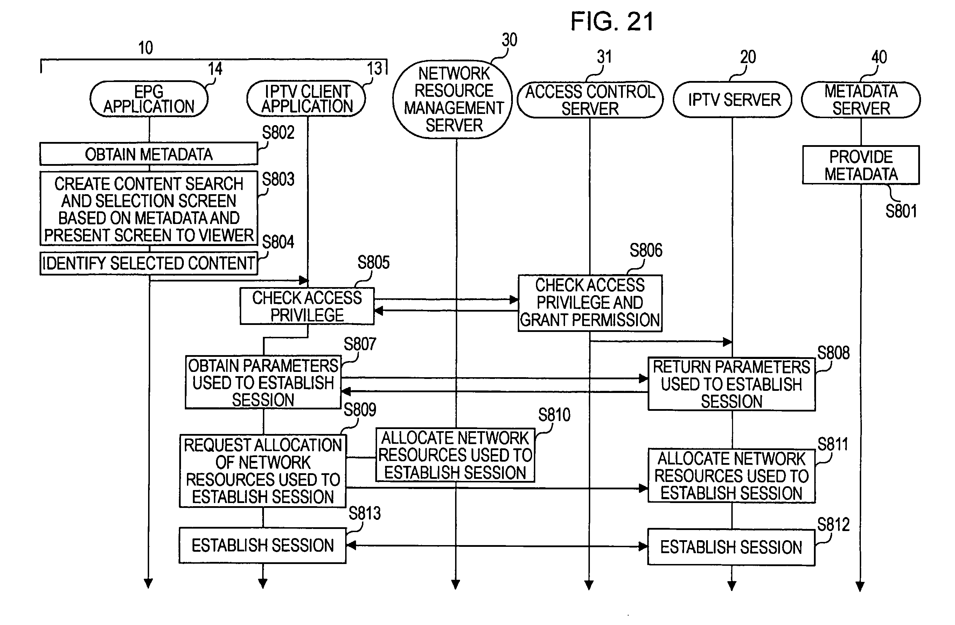

Fig. 21 shows an exemplary procedure up to establishment of an IPTV session for viewing content between the IPTV client terminal 10 and the IPTV server 20 in the ordinary IPTV system.

Upon receiving a content metadata obtaining request from an Electronic Program Guide (EPG) application 14 of the IPTV client terminal 10, a metadata server 40 may return metadata of content (step S801). The metadata of content may include, for example, a title of the content, a content ID identifying the content, and a URL of an IPTV server that distributes the content.

Upon obtaining the metadata (step S802), the EPG application 14 may create an interface screen for content searching and selecting based on the metadata and present the interface screen to the user (step S803). Upon searching and selecting content that the user wishes to view, the EPG application 14 may identify the selected content (step S804), extract the content ID of the content from the obtained metadata, and pass the content ID to the IPTV client application 13.

Upon receiving the content ID from the EPG application 14, the IPTV client application 13 may send a message for requesting checking of the access privilege for the content, the message including the content ID, to an access control server 31 via a network (step S805). Upon receiving the access-privilege checking request message, the access control server 31 may check the access privilege based on the content ID included in the message (step S806). If the access privilege for the content is to be granted, the access control server 31 may send an access-privilege granting response message to the IPTV client application 13 of the IPTV client terminal 10 via the network, and send a message to the IPTV server 20 that the access privilege for the content has been granted to the IPTV client terminal 10.

Upon receiving the response indicating granting of the access privilege for the content, the IPTV client application 13 may send a request message for obtaining parameters (e.g., a parameter for QoS control) used to establish an IPTV session for viewing the content to the IPTV server 20 at the source of distribution via the network (step S807). The request message for obtaining parameters may include the content ID of the content to be viewed.

Upon receiving the request message for obtaining parameters from the IPTV client application 13 of the IPTV client terminal 10, based on the content ID of the content to be viewed included in the message and based on the content of the access-privilege granting message received in advance from the access control server 31, the IPTV server 20 may check whether the request is a request for obtaining parameters used to establish an IPTV session for viewing the content for which the access privilege has been granted to the IPTV client terminal 10. If so, the IPTV server 20 may search for the parameters and return the parameters to the IPTV client application 13 of the IPTV client terminal 10 via the network (step S808).

Then, based on the parameters obtained, the IPTV client application 13 may generate a message for requesting allocation of network resources used to establish a session for viewing the content, and send the message to a network resource management server 32 and the IPTV server 20 via the network (step S809).

Upon receiving the message for requesting allocation of network resources, based on the parameters included in the message, the network resource management server 32 may allocate network resources used to establish an IPTV session for viewing the content (step S810). On the other hand, upon receiving the message for requesting allocation of network resources, based on the parameters included in the message, the IPTV server 20 may allocate resources used to establish an IPTV session for viewing the content (step S811), and establish an IPTV session with the IPTV client application 13 of the IPTV client terminal 10 (steps S812 and S813).

As described above, in the ordinary IPTV system, before a session for viewing content is established between the IPTV client terminal 10 and the IPTV server 20, signaling for the access control 210 and signaling for the session control 220 are executed such that a considerable overhead for protocol processing exists.

In view of the above, an IPTV client terminal, an SIP-INVITE message generating method, an IPTV system, an IPTV session controlling method, and a computer program are provided for controlling an IPTV session over IMS based on TV-Anytime metadata.

According to an aspect of the present invention, there is provided a content receiving client device comprising metadata obtaining means for obtaining metadata including information used to generate an invite message for prompting establishment of a session for receiving content to a content distribution server; message generating means for generating, based on the metadata, the invite message regarding a content to be presented selected by a user, the invite message including a destination address field storing a location information specifying a location of the content and further including a body field storing information used to establish the session; and message sending means for sending the invite message to a session control server that controls the session.

According to an aspect of the present invention, there is provided a content receiving method comprising obtaining metadata including information used to generate an invite message for prompting establishment of a session for receiving content to a content distribution server; generating, based on the metadata, the invite message regarding a content to be presented selected by a user, the invite message including a destination address field storing a location information specifying a location of the content and further including a body field storing information used to establish the session; and sending the invite message to a session control server that controls the session.

According to an aspect of the present invention, there is provided a content distribution system comprising a content distribution server configured to distribute content; a content receiving client device configured to establish a session for receiving the content with the content distribution server to present the content; a session control server configured to control the session; an access control server configured to control an access privilege for the content; and a network resource management server configured to manage network resources used to established the session, wherein the content receiving client device includes message obtaining means for obtaining metadata including information used to generate an invite message for prompting establishment of the session to the content distribution server; message generating means for generating, based on the metadata, the invite message regarding a content to be presented selected by a user, the invite message including a destination address field storing a location information specifying a location of the content and further including a body field storing information used to establish the session; and message sending means for sending the invite message to the session control server, and wherein the session control server includes session controlling means for requesting the access control server to check the access privilege based on the destination address field and for requesting, upon receiving a grant of the access privilege, the network resource management server to allocate the network resources based on the body field.

According to an aspect of the present invention, there is provided a content distribution method comprising obtaining metadata including information used to generate an invite message for prompting establishment of a session for receiving content to a content distribution server; generating, based on the metadata, the invite message regarding a content to be presented selected by a user, the invite message including a destination address field storing a location information specifying a location of the content and further including a body field storing information used to establisn the session; sending the invite message to a session control server; requesting an access control server to check an access privilege for the content based on the destination address field; and requesting, upon receiving a grant of the access privilege, a network resource management server to allocate network resources used to establish the session based on the body field.

According to an aspect of the present invention, there is provided an IPTV client terminal comprising metadata obtaining means for obtaining TV Anytime metadata including information used to generate an SIP INVITE message for prompting establishment of an IPTV session for viewing content over IMS; message generating means for generating, based on the TV Anytime metadata, the SIP INViTE message regarding a content to be viewed selected by a user, the SIP INVITE message including a destination address field storing an SIP URI specifying a location of the content and further including a body field storing an SDP describing a parameter used to establish the IPTV session; and message sending means for sending the SIP INVITE message to an IMS SIP server that controls the IPTV session.

According to an aspect of the present invention, there is provided a method of generating an SIP INVITE message for prompting establishment of an IPTV session for viewing content at a client terminal over IMS, the method comprising obtaining TV Anytime metadata including information used to generate the SIP INVITE message; and generating, based on the TV Anytime metadata, the SIP INVITE message regarding a content to be viewed selected by a user, the SIP INVITE message including a destination address field storing an SIP URI specifying a location of the content and further including a body field storing an SDP describing a parameter used to establish the IPTV session.

According to an aspect of the present invention, there is provided an IPTV system comprising an IPTV server capable of distributing content; an IPTV client terminal capable of establishing an IPTV session over IMS with the IPTV server to allow viewing of the content; an IMS SIP server configured to control the IPTV session; an access control server configured to control an access privilege for the content; and a network resource management server configured to manage network resources used to establish the IPTV session, wherein the IPTV client terminal includes metadata obtaining means for obtaining TV Anytime metadata including information used to generate an SIP INVITE message for prompting establishment of the IPTV session; message generating means for generating, based on the TV Anytime metadata, the SIP INVITE message regarding a content to be viewed selected by a user, the SIP INVITE message including a destination address field storing an SIP URI specifying a location of the content and further including a body field storing an SDP describing a parameter used to establish the IPTV session; and message sending means for sending the SIP INVITE message to the IMS SIP server, and wherein the IMS SIP server includes session controlling means for requesting the access control server to check the access privilege content based on the destination address field, and for requesting, upon receiving a grant of the access privilege, the network resource management server to allocate the network resources based on the SDP.

According to an aspect of the present invention, there is provided an IPTV session controlling method of an IPTV system including an IPTV server capable of distributing content, an IPTV client terminal capable of establishing an IPTV session over IMS with the IPTV server to allow viewing of the content, an IMS SIP server configured to control the IPTV session over IMS, an access control server configured to control an access privilege for the content, and a network resource management server configured to manage network resources used to establish the IPTV session, the IPTV session controlling method comprising obtaining TV Anytime metadata including information used to generate an SIP INVITE message for prompting establishment of the IPTV session; generating, based on the TV Anytime metadata, the SIP INVITE message regarding a content to be viewed selected by a user, the SIP INVITE message including a destination address field storing an SIP URI specifying a location of the content and further including a body field storing an SDP describing a parameter used to establish the IPTV session; sending the SIP INVITE message to the IMS SIP server; requesting the access control server to check the access privilege based on the destination address field; and requesting, upon receiving a grant of the access privilege from the access control server, the network resource management server to allocate the network resources based on the SDP.

According to an aspect of the present invention, there is provided a computer-readable storage medium storing a computer program that causes an IPTV client terminal to perform a method, the method comprising obtaining TV Anytime metadata including information used to generate an SIP INVITE message for prompting establishment of an IPTV session over IMS for viewing content; generating, based on the TV Anytime metadata, the SIP INVITE message regarding a content to be viewed selected by a user, the SIP INVITE message including a destination address field storing an SIP URI specifying a location of the content and further including a body field storing an SDP describing a parameter used to establish the IPTV session; and sending the SIP INVITE message to an IMS SIP server that controls the IPTV session.

According to an aspect of the present invention, there is provided an IPTV client terminal comprising a metadata obtaining unit configured to obtain TV Anytime metadata including information used to generate an SIP INVITE message for prompting establishment of an IPTV session over IMS for viewing content; a message generating unit configured to generate, based on the TV Anytime metadata, the SIP INVITE message regarding a content selected to be viewed by a user, the SIP INVITE message including a destination address field storing an SIP URI specifying a location of the content and further including a body field storing an SDP describing a parameter used to establish the IPTV session; and a message sending unit configured to send the SIP INVITE message to an IMS SIP server that controls the IPTV session.

According to an aspect of the present invention, there is provided an IPTV system comprising an IPTV server capable of distributing content; an IPTV client terminal capable of establishing an IPTV session over IMS with the IPTV server to allow viewing of the content; an IMS SIP server configured to control the IPTV session; an access control server configured to control an access privilege for the content; and a network resource management server configured to manage network resources used to establish the IPTV session, wherein the IPTV client terminal includes a metadata obtaining unit configured to obtain TV Anytime metadata including information used to generate an SIP INVITE message for prompting establishment of the IPTV session; a message generating unit configured to generate, based on the TV Anytime metadata, the SIP INVITE message regarding a content to be viewed selected by a user, the SIP INVITE message including a destination address field storing an SIP URI specifying a location of the content and further including a body field storing an SDP describing a parameter used to establish the IPTV session; and a message sending unit configured to send the SIP INVITE message to the IMS SIP server that controls the IPTV session, and wherein the IMS SIP server includes a session controlling unit configured to request the access control server to check the access privilege based on the destination address field, and to request, upon receiving a grant of the access privilege, the network resource management server to allocate the network resources based on the SDP.

Embodiments of the invention will now be described with reference to the accompanying drawings. It is to be understood that both the foregoing general description and the following detailed description are exemplary and explanatory only and are not restrictive of the invention, as claimed. In the drawings:
Fig. 1 shows an exemplary overview of IPTV session control over IMS in an IPTV system;

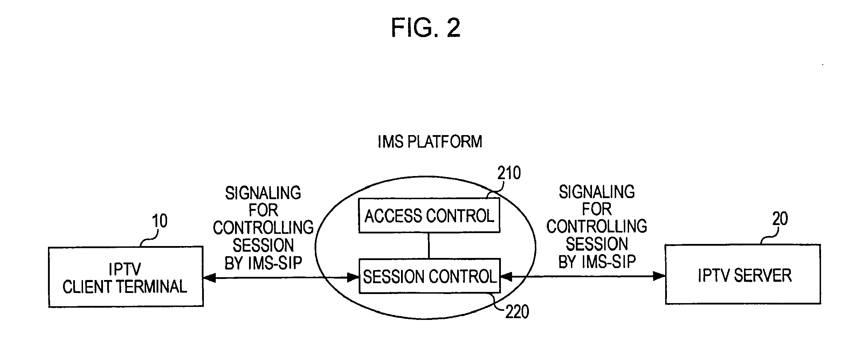

Fig. 2 shows an exemplary state where signaling for access control is included in session control based on IMS-SIP in the IPTV system shown in Fig. 1;
Fig. 3 shows an exemplary overall configuration of the IPTV system shown in Fig. 1;
Fig. 4 shows an exemplary operation up to establishment of an IPTV session between an IPTV client terminal and an IPTV server in the IPTV system shown in Fig. 1;
Fig. 5 shows exemplary TV Anytime metadata storing SIP-URI and SDP;
Fig. 6 shows an exemplary syntax of XML schema used to extend an XML schema in order to introduce an SDP element;
Fig. 7 shows an exemplary sequence from generation of TV Anytime metadata at a metadata server to generation of an SIP-INVITE message at an IPTV client terminal;
Fig. 8 shows an exemplary format of the SIP-INVITE message;
Fig. 9 shows an exemplary syntax of XML schema for extension for introduction of a transportQuality element in TV Anytime metadata;
Fig. 10 shows exemplary TV Anytime metadata including the transportQuality element introduced by the XML schema extension as shown in Fig. 9, storing QoS parameters, such as transport quality;
Fig. 11 shows an exemplary definition of a transportQualityCS restricted word dictionary;
Fig. 12 shows an exemplary definition of a VisualCodingFormatCS restricted word dictionary;
Fig. 13 shows exemplary TV Anytime metadata storing SIP-URI;
Fig. 14 shows an exemplary sequence from generation of the TV Anytime metadata shown in Fig. 13 at a metadata server to generation of an SIP-INVITE message at an IPTV client terminal;
Fig. 15 shows an exemplary syntax of XML schema for extension for introduction of an sipURl attribute;
Fig. 16 shows exemplary TV Anytime metadata storing SIP-URI by the XML schema extension for introducing the sipURl attribute;
Fig. 17 shows an exemplary sequence from generation of the TV Anytime metadata shown in Fig. 16 at a metadata server to generation of an SIP-INVITE message at an IPTV client terminal;
Fig. 18 shows an exemplary hardware configuration of an IP client terminal;
Fig. 19 shows an exemplary hardware configuration of a server;
Fig. 20 shows an exemplary relationship between signaling for access control and signaling for session control in an ordinary IPTV system; and
Fig. 21 shows an exemplary procedure up to establishment of an IPTV session for viewing content between an IPTV client terminal and an IPTV server in the ordinary IPTV system.

The following detailed description refers to the accompanying drawings. Wherever possible, the same reference numbers are used in the drawings and the following description to refer to the same or similar parts. While several exemplary embodiments and features of the invention are described herein, modifications, adaptations and other implementations are possible, without departing from the spirit and scope of the invention. For example, substitutions, additions, or modifications may be made to the components illustrated in the drawings, and the exemplary methods described herein may be modified by substituting, reordering, or adding steps to the disclosed methods. Accordingly, the following detailed description does not limit the invention. Instead, the proper scope of the invention is defined by the appended claims.

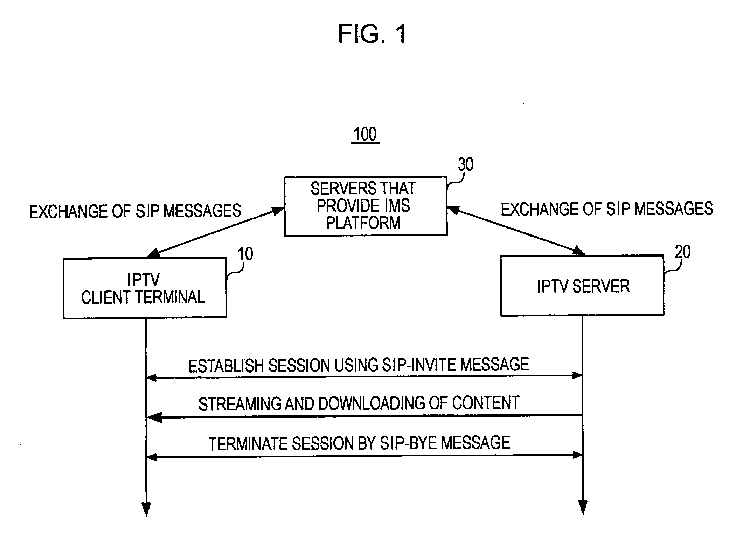

Fig. 1 shows an exemplary overview of control of an IPTV session over IMS in an IPTV system 100. Referring to Fig. 1, in the IPTV system 100, between an IPTV client terminal 10 owned by a user who views content and an IPTV server 20 that distributes content, SIP messages (such as SIP-INVITE messages and SIP-BYE messages) may be exchanged via servers 30 that provide an IMS platform. Accordingly, establishment and termination of IPTV sessions for viewing content may be controlled between the IPTV client terminal 10 and the IPTV server 20.

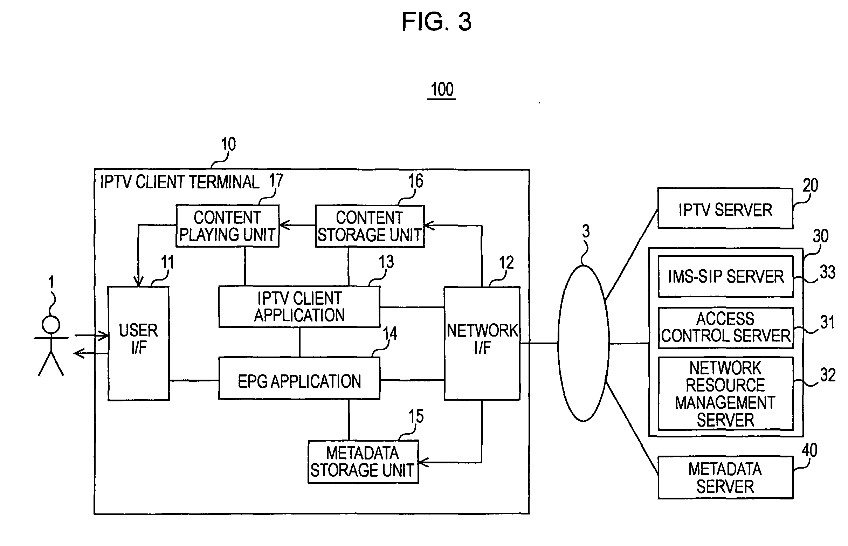

Fig. 3 shows an exemplary overall configuration of the IPTV system 100 shown in Fig. 1. Referring to Fig. 3, the IPTV system 100 may include the IPTV client terminal 10 owned by a user 1 who views content, the IPTV server 20 that distributes content, the servers 30 that provides an IMS platform, a metadata server 40, and a network 3 that can interconnect these components.

For example, the IPTV client terminal 10 may be a personal computer (PC), a set-top box, or a TV set. The IPTV client terminal 10 may include a user interface 11, a network interface 12, an IPTV client application 13, an EPG application 14, a metadata storage unit 15, a content storage unit 16, a content playing unit 17, etc.

The user interface 11 may process information input from or output to the user 1. For example, the user interface 11 may receive input of various instructions from the user 1 and output the instructions to the IPTV client application 13 or the EPG application 14, or output responses from the IPTV client application 13 or the EPG application 14 to the user 1 or content playing information.

The network interface 12 may provide an interface to the network 3 such as the Internet.

The IPTV client application 13 may be software for controlling the IPTV client terminal 10 to operate as an IPTV client.

The EPG application 14 may obtain content metadata from the metadata server 40 via the network 3, create an interface screen for allowing the user 1 to search for and select, using the metadata, content that the user 1 wishes to view, and extract from the metadata information used to create a message for establishing an IPTV session for viewing the content selected by the user 1 via the interface screen and passing the information to the IPTV client application 13.

The metadata storage unit 15 may be formed of a storage device, such as a hard disk drive or a semiconductor memory. The metadata storage unit 15 may store content metadata obtained from the metadata server 40.

The content storage unit 16 may be formed of a storage device, such as a hard disk drive or a semiconductor memory. The content storage unit 16 may store data of content received by streaming or downloading from the IPTV server 20 with which an IPTV session has been established.

The content playing unit 17 may decode and play the data of content stored in the content storage unit 16.

The metadata server 40 may send content metadata maintained in the metadata server 40 in response to an obtaining request from the EPG application 14 of the IPTV client terminal 10.

The servers 30 that provides an IMS platform may include an access control server 31 that controls checking of access privileges of content, a network resource management server 32 that manages network resources used to establish an IPTV session, an IMS-SIP server that controls establishment and termination of an IPTV session using IMS-SIP.

Upon receiving an SIP-INVITE message from the IPTV client application 13 of the IPTV client terminal 10, the IMS-SIP server 33 may request the access control server 31 to check the access privilege of the content using SIP-URI stored in the destination address field of the SIP-INVITE message. Furthermore, upon receiving grant of the access privilege for the content from the access control server 31, the IMS-SIP server 33 may request the network resource management server 32 to allocate network resources used to establish an IPTV session for viewing the content using SDP stored in the body field of the SIP-INVITE message. Furthermore, upon receiving a response to the request for allocating network resources from the network resource management server 32, the IMS-SIP server 33 may send the SIP-INVITE message received from the IPTV client application 13 to the IPTV server 20 corresponding to SIP-URI stored in the destination address field of the SIP-INVITE message.

The IPTV server 20 may maintain data of content that can be distributed. The IPTV server 20 may establish an IPTV session for viewing content with the IPTV client application 13 of the IPTV client terminal 10, and distribute the content to the IPTV client application 13 of the IPTV client terminal 10 by streaming or downloading.

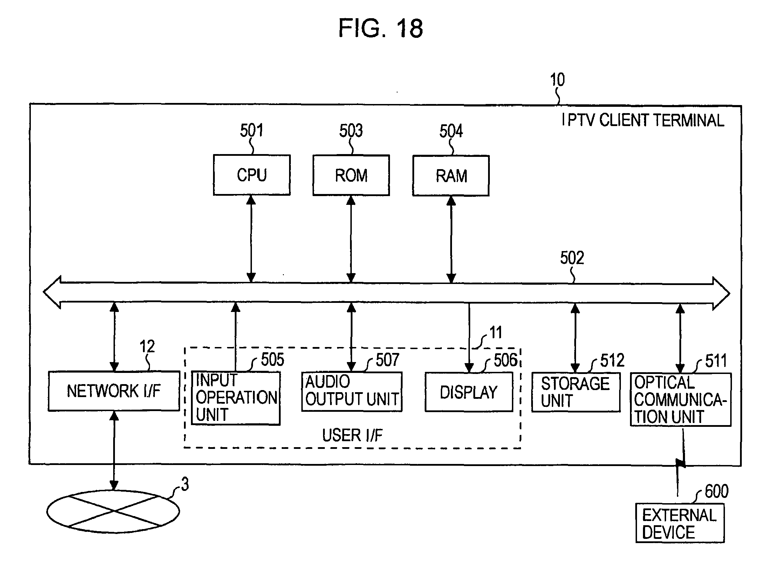

Fig. 18 shows an exemplary hardware configuration of the IPTV client terminal 10. Referring to Fig. 18, a central processing unit (CPU) 501 may be connected via a system bus 502 to a read-only memory (ROM) 503, a random access memory (RAM) 504, an input operation unit 505, a display unit 506, an audio output unit 507, the network interface 12, an optical communication unit 511, and a storage unit 512.

The input operation unit 505 may have various keys, and may process various instructions or data input by the user. The instructions input by the user via the input operation unit 505 may be fed to the CPU 501 via the system bus 502 by an input interface (not shown). The display unit 506 may be formed of, for example, a display device, such as a liquid crystal display (LCD), and a display control circuit that drives the display device. The audio output unit 507 may include a circuit that converts digital audio signals into analog audio signals and a speaker. The input operation unit 505, the display unit 506, and the audio output unit 507 may correspond to the user interface 11 shown in Fig. 3. The network interface 12 may execute processing for wired or wireless connection with the network 3.

The optical communication unit 511 may be an interface for executing processing for communication with a remote controller or other external devices. More specifically, the optical communication unit 511 may perform communication with external devices using light, such as infrared radiation, as a wireless medium. Instead of light, other wireless media may be used, such as radio waves, acoustic waves, or electromagnetic waves. The storage unit 512 may be a storage device, such as a hard disk drive or a semiconductor memory.

The ROM 503 is a read-only memory that may permanently store programs and data for causing a computer to function as the IPTV client terminal 10. Alternatively, the programs may be stored in the storage unit 512. The RAM 504 may be a memory used to write programs loaded from the ROM 503 or the storage unit 512, and work data of programs. The CPU 501 may parse and execute programs stored in the ROM 503 or programs loaded in the RAM 504.

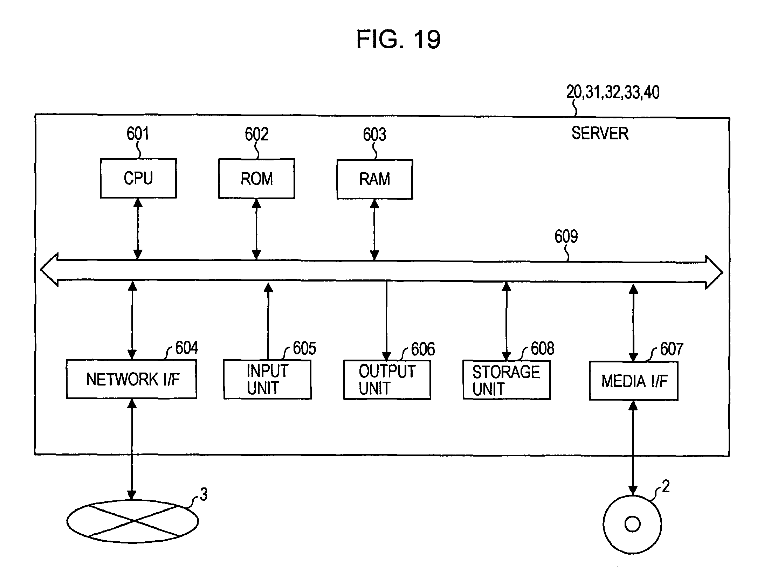

Fig. 19 shows an exemplary hardware configuration of the IPTV server 20, the access control server 31, the network resource management server 32, the IMS-SIP server 33, and the metadata server 40. As shown in Fig. 19, each of the IPTV server 20, the access control server 31, the network resource management server 32, the IMS-SIP server 33, and the metadata server 40 may have a configuration of a typical computer system such as a personal computer.

More specifically, a CPU 601 may be connected via a system bus 609 to a ROM 602, a RAM 603, a network interface 604, an input unit 605 (for example, a keyboard and a mouse), an output unit 606 (for example, a speaker and a display such as a cathode-ray tube (CRT) display or an LCD), a media interface 607, and a storage unit 608 (for example, a hard disk drive or a non-volatile memory).

The network interface 604 may execute processing for wired or wireless connection with the network 3. The storage unit 608 may store a program for causing a computer to function as a specific server and various types of data. The CPU 601 may load programs from the ROM 602 or the storage unit 608 to the RAM 603, and parse and execute the programs. On the media interface 607, a removable medium 2, such as a magnetic disk, an optical disk, a magneto-optical disk, or a semiconductor memory, may be mounted as needed, and programs read from the removable medium 2 may be installed on the storage unit 608 as needed.

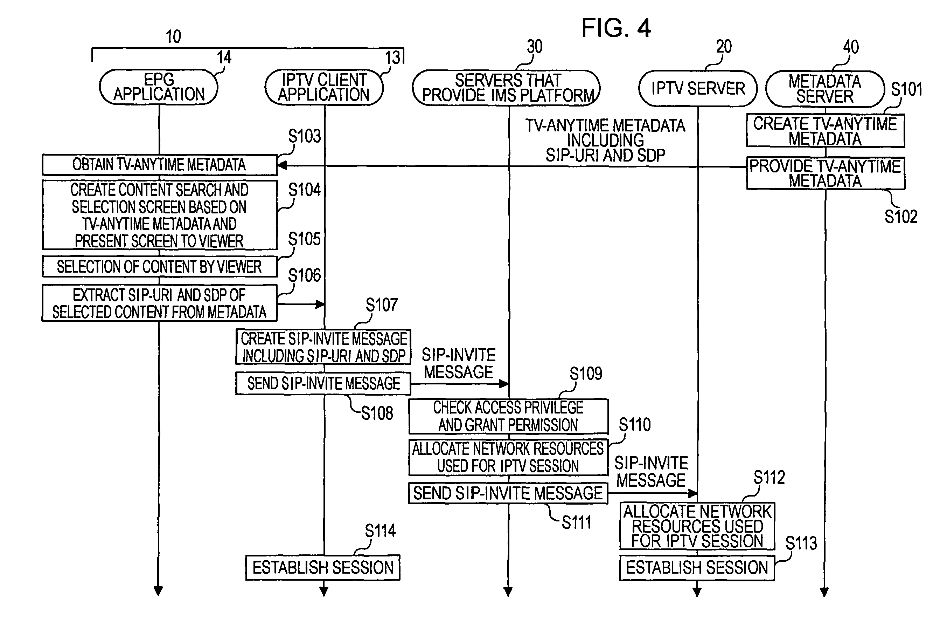

Fig. 4 shows an exemplary operation up to establishment of an IPTV session between the IPTV client terminal 10 and the IPTV server 20 in the IPTV system 100, assuming that the IPTV client application 13 and the EPG application 14 have already been started at the IPTV client terminal 10.

The metadata server 40 may store content metadata that has been created (step S101). Upon receiving a request for obtaining metadata from the EPG application 14 of the IPTV client terminal 10, the metadata server 40 may provide content metadata to the EPG application 14 of the IPTV client terminal 10 (step S102). The EPG application 14 of the IPTV client terminal 10 may receive the content metadata from the metadata server 40 and store the content metadata in the metadata storage unit 15 (step S103).

Based on the metadata obtained, the EPG application 14 may create an interface screen for searching and selecting content, and present the interface screen to the user 1 via the user interface 11 (step S104). When the user 1 has searched for and selected, using the interface screen, content that the user 1 wishes to view (step S105), the EPG application 14 may recognize the content selected by the user 1 as content to be viewed, extract SIP-URI specifying the location of the content to be viewed and SDP corresponding to the content from the metadata stored in the metadata storage unit 15, and pass the SIP-URI and SDP to the IPTV client application 13 (step S106).

Using the SIP-URI and SDP obtained from the EPG application 14, the IPTV client application 13 may generate an SIP-INVITE message for prompting establishment of an IPTV session for viewing the content (step S107), and send the SIP-INVITE message via the network 3 to the IMS-SIP server 33 in the servers 30 providing an IMS platform (step S108).

In the servers 30 providing an IMS platform, upon receiving the SIP-INVITE message from the EPG application 14 of the IPTV client terminal 10, the IMS-SIP server 33 may extract SIP-URI from the SIP-INVITE message, and send a message requesting a check of the access privilege of content, the message at least including the SIP-URI, to the access control server 31. Based on the SIP-URI included in the access-privilege check request message, the access control server 31 may check the access privilege of the content (step S109). If the access control server 31 determines that the access privilege for the content is to be granted, the access control server 31 may send an access-privilege granting response message to the IMS-SIP server 33. On the other hand, if the access control server 31 determines that the access privilege for the content is to be denied, the access control server 31 may send an access-privilege denying response message to the IMS-SIP server 33. The following description assumes the access privilege is granted.

Upon receiving the access-privilege granting response message, the IMS-SIP server 33 may extract SDP from the body field of the SIP-INVITE message, generate a message for requesting allocation of network resources using the SDP, and send the message to the network resource management server 32. Upon receiving the network-resource allocation request message, base on SDP included in the message, the network resource management server 32 may allocate network resources used to establish an IPTV session for viewing content (step S110), and then send a network-resource allocation response message to the IMS-SIP server 33. Upon receiving the network-resource allocation response message, the IMS-SIP server 33 may send the SIP-INVITE message to the IPTV server 20 based on the destination address in the SIP-INVITE message (step S111).

Upon receiving the SIP-INVITE message from the IMS-SIP server 33, the IPTV server 20 may allocate network resources used to establish an IPTV session for viewing content (step S112), and establish an IPTV session with the IPTV client application 13 of the IPTV client terminal 10 (steps S113 and S114).

Then, although not shown, content data may be distributed using the established IPTV session by streaming or downloading from the IPTV server 20 to the IPTV client application 13 of the IPTV client terminal 10.

TV-Anytime may be used as the format of content metadata. The TV-Anytime standard may not define specification for providing information used to establish an IPTV session over IMS. Consistent with an embodiment of the disclosure, SIP-URI specifying the location of content and SDP describing parameters used to establish a session for viewing the content, which are information used to establish an IPTV session over IMS, may be stored in TV-Anytime metadata in the following manner.

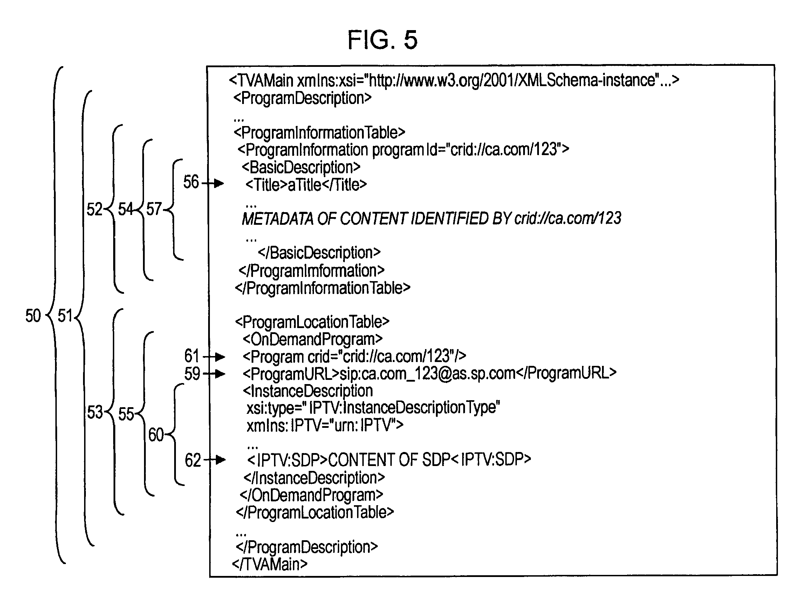

Fig. 5 shows exemplary of TV-Anytime metadata storing SIP-URI specifying the location of content and SDP describing parameters regarding the content.

TV-Anytime metadata may be an eXtensible Markup Language (XML) document having a TVAMain element 50 as the root element. A ProgramDescription element 51 may be provided under the TVAMain element 50, . Furthermore, a ProgramlnformationTable element 52 and a ProgramLocationTable element 53 may be provided under the ProgramDescription element 51. One or more ProgramInformation elements 54 may be provided under the ProgramlnformationTable element 52. A title element 56 that stores a title of content, and a BasicDescription element 57 having child elements (not shown) that store other content metadata may be provided under each ProgramInformation element 54. Furthermore, the ProgramInformation element 54 may have a programld attribute, where a content reference identifier (CRID), which serves as an ID of content, may be stored.

The CRID may have the format "crid://<DNS name of CRID_Authority>/<Identifier that is unique within CRID_Authority>", and may be defined as, for example, "crid://ca.com/123." The CRID_Authority may be an entity that generates a unique CRID within the scope of CRID_Authority.

One or more OnDemandProgram elements 55, which are derivatives of ProgramLocation elements, may be provided under the ProgramLocationTable element 53. A Program element 61 storing the CRID as the value of a crid attribute, a programURI element 59 storing SIP-URI specifying the location of content, and an InstanceDescription element 60 may be provided under each OnDemandProgram element 55.

In TV-Anytime, ProgramURL may be defined as "an element specifying a program location," and the location of content may be specified in the form of a uniform resource locator (URL). SIP-URI representing the destination address of an SIP message may be used to specify the location of content. For example, the SIP-URI may be specified in the form of "sip:ca.com_123@as.sp.com." "ca.com_123" may be generated by removing "crid:" representing the scheme in the URL and removing "//" from the CRID ("crid://ca.com/123") and then replacing the separator "/" with underscore "_". "as.sp.com" following "@" may be the domain name system (DNS) name of the IPTV server 20.

An SDP element 62 may be provided under the InstanceDescription element 60. The SDP element 62 may store SDP including parameters used to establish an IPTV session for viewing content, for example, a session name, a session generator, an effective period of the session, and information regarding a codec used to send or receive audio data or moving-picture data as media description. However, the TV-Anytime standard may not define any element that can store SDP. Thus, consistent with an embodiment of the disclosure, the SDP element 62 for storing SDP may define an InstanceDescriptionType element, which may be an extended element of the type corresponding to the InstanceDescription element defined in the XML schema for original TV-Anytime metadata.

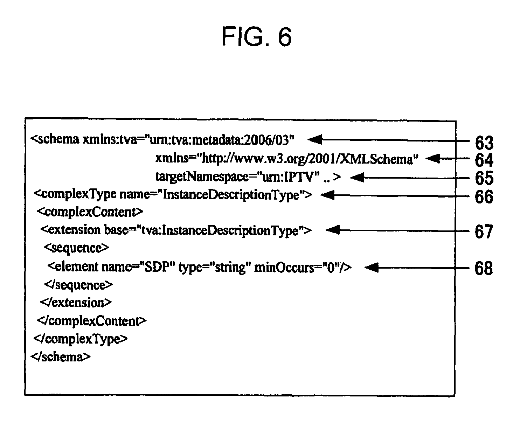

Fig. 6 shows an exemplary XML schema syntax used for XML schema extension for introducing the SDP element. The XML schema syntax may include a namespace 63 that identifies original TV-Anytime metadata, a namespace 64 that identifies the XML schema, a declaration 65 that the newly defined schema is identified by "urn:IPTV," a definition 66 of InstanceDescriptionType in the new XML schema, a specification 67 of an original TV-Anytime element that is extended, and an SDP definition 68 representing attributes that are added.

In the exemplary TV-Anytime metadata shown in Fig. 5, according to overriding by an xsi:type attribute in the InstanceDescription element 60, the InstanceDescriptionType of the namespace "urn:IPTV" introduced by the XML schema extension described above may be referred to, so that the InstanceDescription element of the original TV-Anytime metadata is replaced with the InstanceDescription element 60 having the SDP element 62 defined by the XML schema extension.

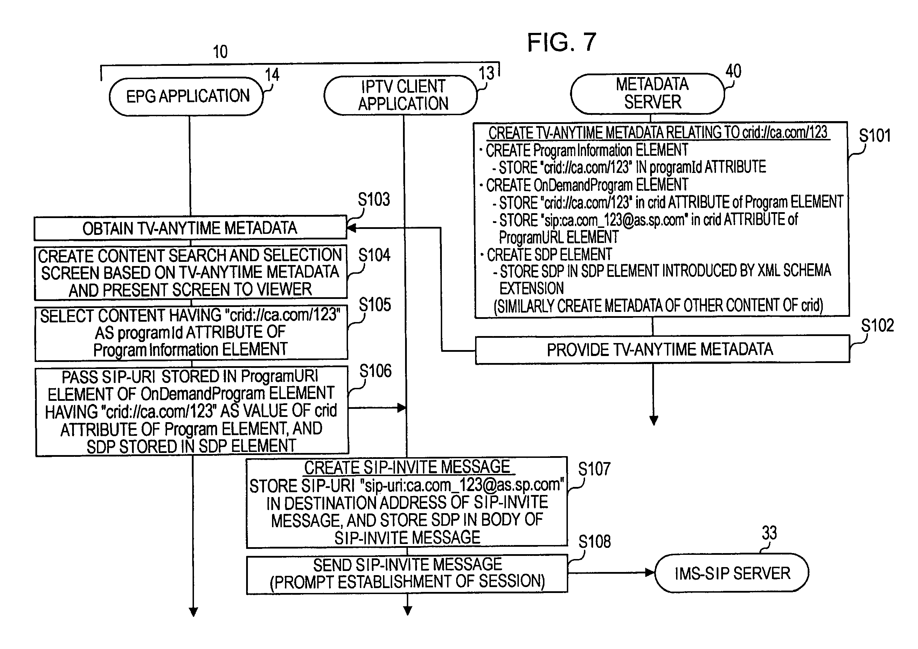

Fig. 7 shows an exemplary sequence from generation of the TV-Anytime metadata shown in Fig. 5 to generation of an SIP-INVITE message at the IPTV client terminal 10.

The exemplary procedure of creating the TV-Anytime metadata shown in Fig. 5 at the metadata server 40 is described. First, the metadata server 40 may store "crid://ca.com/123," which is a CRID identifying content, as a value of the programID attribute of the ProgramInformation element 54. Then, the metadata server 40 may store "crid://ca.com/123" as a value of the Program element 61 in the OnDemandProgram element 55. Thus, the ProgramInformation element 54 and the OnDemandProgram element 55 may be associated with each other by the value of the crid attribute. Then, as SIP-URI specifying the location of the content, the metadata server 40 may store "sip:ca.com_123@as.sp.com" in the programURL element 59 in the OnDemandProgram element 55, generated from the value "crid://ca.com/123" of the crid attribute and the DNS name "as.sp.com" of the IPTV server 20 at the source of distribution of the content. Furthermore, the metadata server 40 may store SDP in the SDP element 62 introduced under the InstanceDescription element 60 by the XML schema extension, the SDP including parameters used to establish an IPTV session for viewing the content., thereby concluding storing of SIP-URI and SDP regarding a single item of content. The storing of SIP-URI and SDP may be repeated for a plurality of items of content, and each time the ProgramInformation element 54 in the ProgramInformationTable element 52 and the OnDemandProgram element 55 in the ProgramLocationTable element 53 are added (step S101).

The EPG application 14 of the IPTV client terminal 10 may send a content-metadata obtaining request to the metadata server 40 via the network 3 to obtain TV-Anytime metadata from the metadata server 40 (step S103). Based on the content of one or more ProgramInformation elements 54 in the ProgramInformationTable element 52 in the TV-Anytime metadata, the EPG application 14 may create an interface screen for content searching and selecting, including titles and other information of content, and present the interface screen to the user 1 via the user interface 11 (step S104). Upon selecting a title of content desired by the user via the interface screen, the EPG application 14 may extract the value of the programId attribute of the ProgramInformation element 54 having the title as the content of the Title element 56 (step S105). Content having the CRID "crid://ca.com/123" may be selected as content to be viewed.

Upon receiving information regarding the selection of content, the EPG application 14 may extract the SIP-URI "sip:ca.com_123@as.sp.com" stored in the ProgramURL element 59 of the OnDemandProgram element 55 having "crid://ca.com/123" as the value of the crid attribute of the Program element 61, and the content of SDP of the SDP element 62 provided under the InstanceDescription element 60 in the OnDemandProgram element 55, and pass the SIP-URI and the content of SDP to the IPTV client application 13 (step S106).

The IPTV client application 13 may store the SIP-URI "sip:ca.com_123@as.sp.com" passed from the EPG application 14 in the destination address field of the SIP-INVITE message, and store the SDP passed from the EPG application 14 in the body field of the SIP-INVITE message. Accordingly, the SIP-INVITE message for prompting establishment of an IPTV session for viewing content is generated (step S107). The IPTV client application 13 may send the SIP-INVITE message to the IMS-SIP server 33 via the network 3 (step S108). The subsequent operation was described above with reference to Fig. 4.

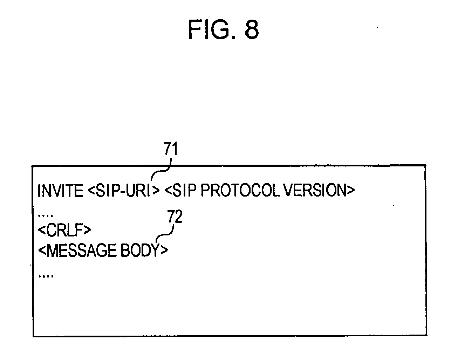

Fig. 8 shows an exemplary format of an SIP-INVITE message. In an SIP-URI field 71 storing a destination address of the SIP-INVITE message, information that enables address resolution of the content to be viewed, i.e., "sip:ca.com_123@as.sp.com" in the above example, may be stored, and SDP may be stored in a body field 72. In the IPTV system 100 consistent with an embodiment of the disclosure, negotiation of parameters for establishing an IPTV session for viewing content may be executed by exchanging the SIP-INVITE message between the IPTV client terminal 10 and the IPTV server 20 via the IMS-SIP server 33.

Next, an example of modification of the TV-Anytime metadata shown in Fig. 5 will be described.

Description of SDP may be stored in the portion of "content of SDP" in the SDP element 62 of the TV-Anytime metadata shown in Fig. 5. However, it may not be possible to extract information regarding a codec, parameters, etc., because the SDP element 62 is as an XML element. If TV-Anytime metadata including SDP is stored in a database that can handle XML elements or their attributes directly as targets for searching, as in the case of native XML databases, it may not be possible to perform searching based on the content of SDP. In order to store metadata in such databases and search for target metadata based on information regarding a codec, QoS parameters, etc., the following modification may be employed.

Codec information may be described in a Coding element in a VideoAttributes element in an AVAttributes element in an InstanceDescription element in a ProgramLocation element of original TV-Anytime metadata. However, the original TV-Anytime metadata may not define any element or attribute in which QoS parameters, such as transfer quality, can be described.

Thus, in this modification consistent with an embodiment of the disclosure, in order to describe a QoS parameter, such as transfer quality, in TV-Anytime metadata so that searching and querying can be performed using the QoS parameter, the XML schema may be extended so that, for example, a transportQuality element for storing a QoS parameter is newly introduced in the AVAttributes element in the InstanceDescription element in the ProgramLocation element.

Next, how the XML schema is extended to introduce the transportQuality element will be described.

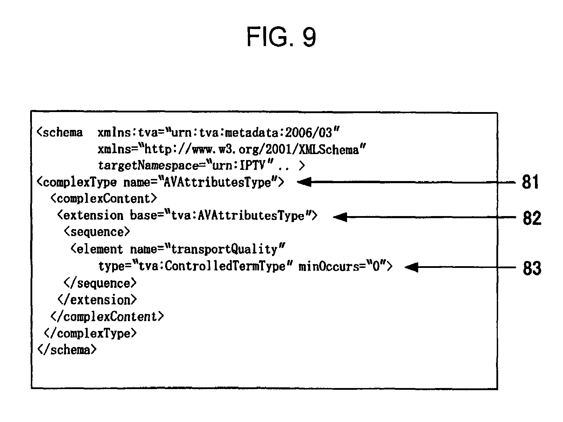

Fig. 9 shows an exemplary XML schema syntax used to introduce the transportQuality element by extension. The syntax for XML schema extension may include a definition 81 of AVAttributesType in the new XML schema, a specification 82 of an element of original TV-Anytime metadata that is extended, and a definition 83 of transportQuality as an attribute that is added.

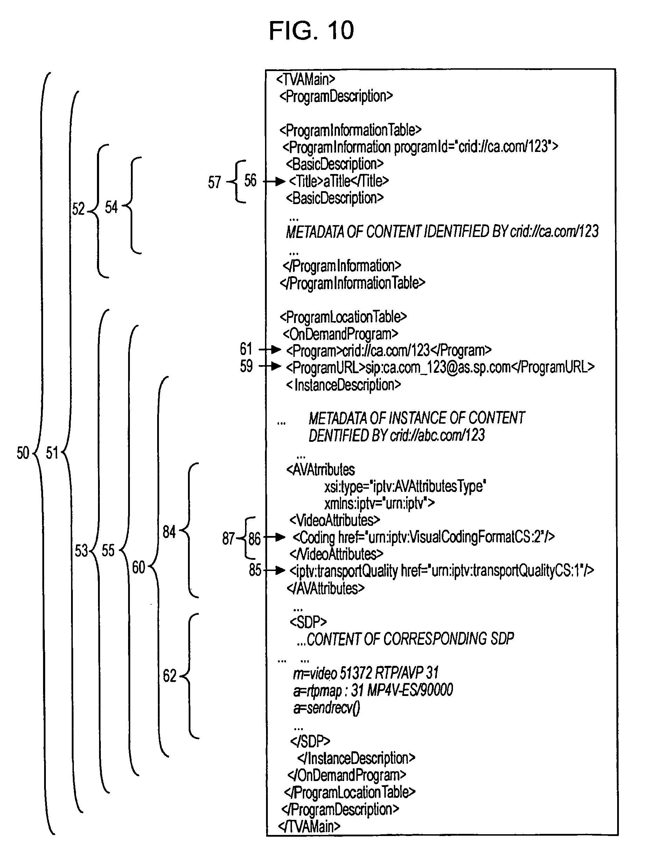

Fig. 10 shows exemplary TV-Anytime metadata including the transportQuality element introduced by the XML schema extension, storing a QoS parameter, such as transfer quality.

In the TV-Anytime metadata, a ProgramDescription element 51 may be provided under a TVAMain element 50 as the root element. Furthermore, a ProgramInformationTable element 52 and a ProgramLocationTable element 53 may be provided under the ProgramDescription element 51. One or more ProgramInformation elements 54 may be provided under the ProgramlnformationTable element 52. In each ProgramInformation element 54, metadata, such as a title of content distributed by streaming or downloading, may be described. The ProgramInformation element 54 may have a programld attribute, where CRID, which is an ID of content, may be stored.

One or more OnDemandProgram elements 55, which are derivatives of the ProgramLocation element, may be provided in the ProgramLocationTable element 53. A Program element 61 storing the CRID, a ProgramURL element 59 storing SIP-URI specifying the location of the content, and an InstanceDescription element 60 may be provided under each OnDemandProgram element 55.

An SDP element 62 and an AVAttributes element 84 may be provided under the InstanceDescription element 60. A VideoAttributes element 87 having a Coding element 86 as a child element, in which codec information is described, may be provided under the AVAttributes element 84. In this example, according to overriding by an xsi:type attribute of the AVAttributes element 84, AVAttributes of the namespace "urn:IPTV" introduced by the XML schema extension described above may be referred to, so that the AVAttributes element of the original TV-Anytime metadata may be replaced with the AVAttributes element 84 having a transportQuality element 85 defined by the XML schema extension.

The transportQuality element 85 may be of ControlledTermType, which is a type that refers to a restricted word dictionary. Thus, the dictionary that is referred to may be defined as follows.

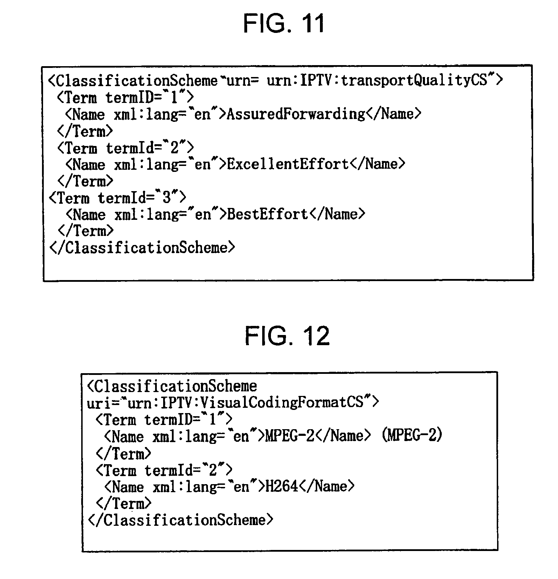

Fig. 11 shows an exemplary definition of a transportQualityCS restricted word dictionary. Restricted words AssuredForwarding, ExcellentEffort, and BestEffort may represent three transfer quality classes in order from higher quality (less delay or jitter) to lower quality. In the following dictionary definition, AssuredForwarding may be assigned to "urn:iptv:transportQualityCS:1," ExcellentEffort may be assigned to "urn:iptv:transportQualityCS:2," and BestEffort may be assigned to "urn:iptv:transportQualityCS:3."

In SDP, media attributes to be described may be represented by combinations of m/a rows. For example, the transfer quality classes described above may be determined according to the following combinations of attribute values in the content of the corresponding SDP.

The transfer quality class may be AssuredForwarding when the values of m/a rows of the SDP are one of (1) and (2) below:
(1) media-type = video and a = sendrecv, or
(2) media-type = audio and a = sendrecv.

The transfer quality class may be ExcellentEffort when the values of m/a rows of the SDP are one of (1) to (4) below:
(1) media-type = video and a = sendonly,
(2) media-type = video and a = recvonly,
(3) media-type = audio and a = sendonly, or
(4) media-type = audio and a = recvonly.

The transfer quality class may be BestEffort when the values of m/a rows of the SDP are one of (1) to (4) below:
(1) media-type = data,
(2) media-type = text,
(3) media-type = application, or
(4) media-type = message.

For example, the transfer quality class may be "AssuredForwarding" if the content of SDP includes the following rows:
"m = video ..." (indicating that the media type is video), and
"a = sendrecv" (indicating that processing is to be executed in send and receive mode).

In the exemplary TV-Anytime metadata extended to introduce the transportQuality element 85, shown in Fig. 10, in the Coding element 86, a dictionary reference href = "urn:iptv:VisualCodingFormatCS:2" may be described, assuming that there exits a VisualCodingFormatCS restricted word dictionary definition identified by a namespace "urn:iptv:VisualCodingFormatCS." Fig. 12 shows an exemplary VisualCodingFormatCS restricted word dictionary definition.

As described above, consistent with an embodiment of the disclosure, TV-Anytime metadata storing information used to generate an SIP-INVITE message for prompting establishment of an IPTV session over IMS for viewing content may be provided to the IPTV client terminal 10, so that, based on TV-Anytime metadata, the IPTV client terminal 10 may generate an SIP-INVITE message in which SIP-URI specifying the location of content to be viewed is stored in the destination address field and in which SDP describing parameters used to establish an IPTV session for viewing the content is stored in the body field.

Furthermore, the SIP-URI in the SIP-INVITE message may serve as a guide to information used for address resolution for the content. Thus, for example, an authentication mechanism used to open a session according to SIP, provided by the IMS platform, may be used for access control of content. Accordingly, access control of the content may be implemented in a session control layer based on IMS-SIP, making it possible to include signaling for access control 210 in session control 220 based on IMS-SIP.

Next, consistent with another embodiment of the disclosure, a method of storing SIP-URI in TV-Anytime metadata and a method of generating an SIP-INVITE message using the TV-Anytime metadata at the IPTV client terminal 10 will be described.

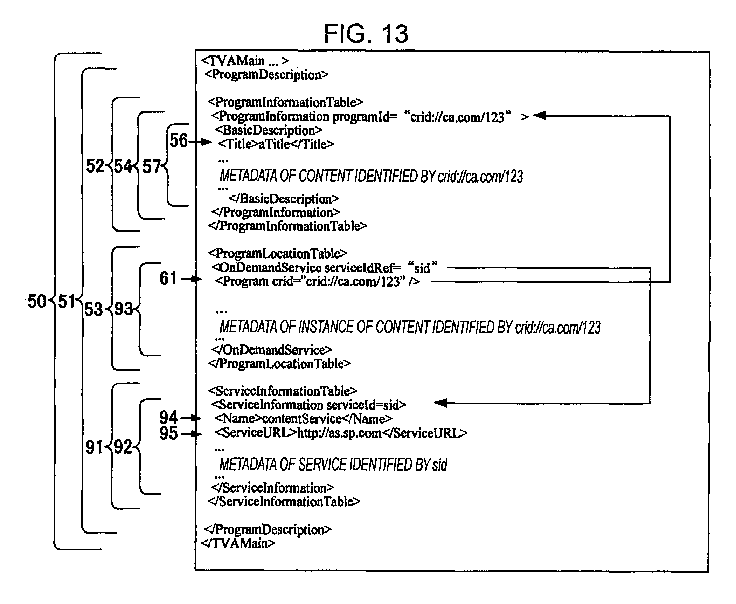

Fig. 13 shows exemplary TV-Anytime metadata storing SIP-URI. In TV-Anytime metadata, a ProgramDescription element 51 may be provided under a TVAMain element 50 as the root element. A ProgramInformationTable element 52, a ProgramLocationTable element 53, and a ServiceInformationTable element 91 may be provided under the ProgramDescription element 51. A plurality of ServiceInformation elements 92 may be provided in the ServiceInformationTable element 91. The structure of the ProgramInformationTable element 52 may be the same as that shown in Figs. 5 and 10.

An OnDemandService element 93, instead of the OnDemandProgram element 55 (Figs. 5 and 10), which is a derivative of a ProgramLocation element, may be provided in the ProgramLocationTable element 53. In the OnDemandService element 93, a Program element 61 storing CRID as the value of a crid attribute, and metadata of an instance of content (metadata relevant to distribution) may be stored, and the ID of a service for providing content may be stored as the value of a serviceIdRef attribute. In this example, "sid" may be stored as the service ID.

Metadata of a service, such as a name of the service, may be stored in each ServiceInformation element 92. Furthermore, the ServiceInformation element 92 may store a service ID as the value of a serviceld attribute, and may be identified by the value of the serviceld attribute. Furthermore, a Name element 94 that stores a service name, a ServiceURL element 95 that stores a URL of the IPTV server 20 that provides the service, and elements (not shown) that store other metadata of the service may be provided under the ServiceInformation element 92.

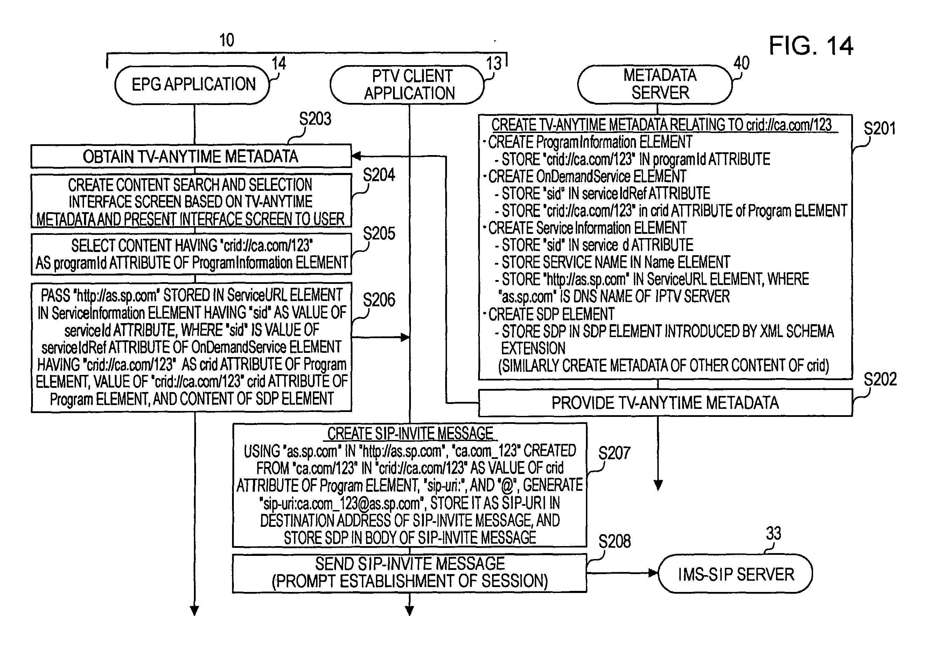

In TV-Anytime, ServiceURL may be defined as: "An optional URL for the service, e.g., a DVB URL. This URL allows the receiver to identify the associated physical service." The URL of the IPTV server 20 at the source of content distribution may be specified as ServiceURL. Using "http:" as the scheme of the URL of the IPTV server 20, the URL may be specified as "http://as.sp.com," as shown in Fig. 14.

Fig. 14 shows an exemplary sequence from generation of TV-Anytime metadata shown in Fig. 13 at the metadata server 40 to generation of an SIP-INVITE message at the IPTV client terminal 10.

The procedure of generating TV-Anytime metadata shown in Fig. 13 at the metadata server 40 is as follows. First, the metadata server 40 may store a CRID "crid://ca.com/123" identifying content as a value of the programld attribute of the ProgramInformation element 54. Then, the metadata server 40 may store a service ID, for example, "sid," as a value of the serviceIdRef attribute of the OnDemandService element 93, and store the CRID "crid://ca.com/123" as a value of the crid attribute of the Program element 61 in the OnDemandService element 93. Then, the metadata server 40 may store the service ID stored as the value of the serviceIdRef attribute of the OnDemandService element 93, for example, "sid," as a value of the serviceld attribute of the ServiceInformation element 92, store a service name, for example, "contentService", in the Name element 94 of the ServiceInformation element 92, and store "http://as.sp.com" in the ServiceURL element 95 of the ServiceInformation element 92, where "as.sp.com" is the DNS name of the IPTV server 20 at the source of content distribution. In the TV-Anytime metadata, SDP used to establish an IPTV session for viewing the content may also be stored. The method of storing the SDP in TV-Anytime metadata may be the same as that described earlier.

The EPG application 14 of the IPTV client terminal 10 may send a request for obtaining metadata of content to the metadata server 40 via the network 3 to obtain TV-Anytime metadata from the metadata server 40 (step S203). Based on the content of one or more ProgramInformation elements 54 in the ProgramInformationTable element 52 in the TV-Anytime metadata obtained, the EPG application 14 may create a content searching and selecting interface screen including titles of content, and present the interface screen to the user 1 via the user interface 11 (step S204). Upon selecting a title of content desired by the user 1 using the interface screen, the EPG application 14 may extract the value of the programId attribute of the ProgramInformation element 54 having the title as the content of the Title element 56 (step S205). Content having the CRID "crid://ca.com/123" may be selected as content to be viewed.

Upon receiving information regarding the selection of content, the EPG application 14 may pass "http://as.sp.com," "crid://ca.com/123," and the content of SDP stored in an SDP element (not shown) to the IPTV client application 13 (step S206), where "http://as.sp.com" may be extracted from the ServiceURL element 95 in the ServiceInformation element 92 having "sid" as the value of the serviceld attribute, "sid" being the value of the serviceIdRef attribute of the OnDemandService element 93 having "crid://ca.com/123" as the value of the crid attribute of the program element 61 in TV-Anytime metadata, and "crid://ca.com/123" may be the value of the crid attribute of the Program element 61 in the OnDemandService element 93.

Using "as.sp.com" generated by removing "http://" from "http://as.sp.com" passed from the EPG application 14, "ca.com_123" generated by removing "crid://" from "crid://ca.com/123", which is the value of the crid attribute of the Program element 61 of the OnDemandService element 93, and replacing "/" with "_", and further using "sip-uri:" and "@", the IPTV client application 13 may generate and store "sip-uri:ca.com_123@as.sp.com" as SIP-URI in the destination address field of the SIP-INVITE message. Furthermore, the IPTV client application 13 may store the SDP in the body field of the SIP-INVITE message, thereby generating an SIP-INVITE message for prompting establishment of an IPTV session for viewing content (step S207). The IPTV client application 13 may send the generated SIP-INVITE message to the IMS-SIP server 33 via the network 3 (step S208). The subsequent operation may be the same as that described with reference to Fig. 4.

Accordingly, it is possible to obtain SIP-URI to be stored in the destination address field of an SIP-INVITE message at the IPTV client terminal 10 based on TV-Anytime metadata.

Next, consistent with another embodiment of the disclosure, a method of storing SIP-URI in TV-Anytime metadata and a method of generating an SIP-INVITE message at the IPTV client terminal 10 using the TV-Anytime metadata will be described.

There exists no element that can store SIP-URI in the ProgramlnformationType element, which corresponds to the ProgramInformation element defined in the XML schema for original TV-Anytime metadata. Thus, consistent with an embodiment of the disclosure, the ProgramInformationType element may be extended to newly introduce a sipURI attribute so that SIP-URI can be stored.

For the purpose of the XML schema extension, a namespace for the new XML schema, for example, "urn:IPTV", may be introduced, and the sipURI attribute may be introduced under this namespace in a derivative of the original ProgramInformationType element in TV-Anytime metadata.

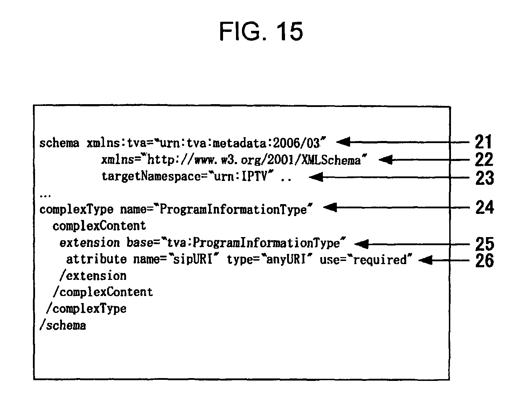

Fig. 15 shows an exemplary syntax of the XML schema for extension for introduction of the sipURI attribute. In the syntax for XML schema extension, a namespace 21 that identifies the original TV-Anytime metadata, a namespace 22 that identifies the XML schema, a declaration 23 that the newly defined schema is identified by "urn:IPTV", a definition 24 of ProgramInformationType in the new XML schema, a specification of an element in original TV-Anytime metadata that is to be extended, a definition of sipURI, which is an attribute that is added, may be provided.

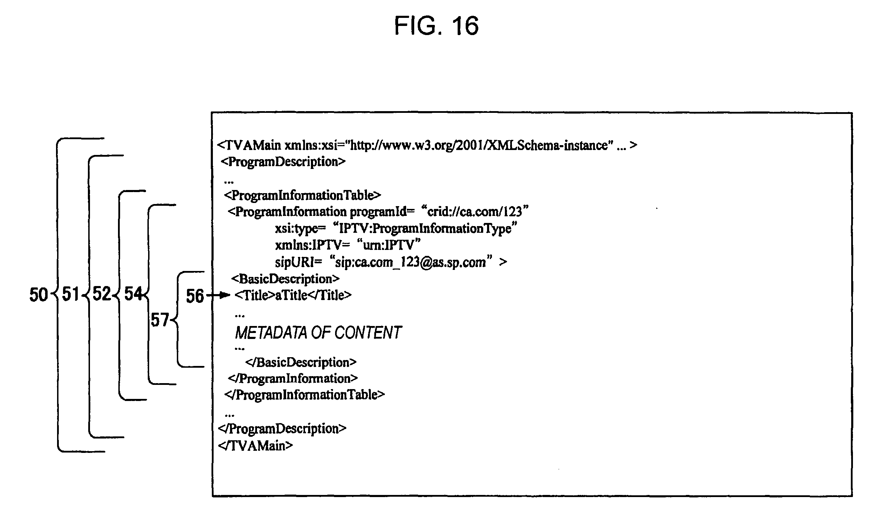

Fig. 16 shows exemplary TV-Anytime metadata storing SIP-URI by the XML schema extension for introducing the sipURI attribute.

In TV-Anytime, a ProgramDescription element 51 may be provided under a TVAMain element 50 as the root element. A ProgramInformationTable element 52 may be provided under the ProgramDescription element 51. One or more ProgramInformation elements 54 may be provided in the ProgramInformationTable element 52. Each ProgramInformation element 54 may have a programld attribute, where CRID, which is an ID of content, may be stored. Furthermore, a BasicDescription element 57 is provided under the ProgramInformationTable element 52. A Title element 56 that stores a title of content, and elements (not shown) that store other metadata of content may be provided under the BasicDescription element 57.

In TV-Anytime metadata, according to overriding by an xsi:type attribute in the ProgramInformation element 54, the ProgramInformationType of the namespace "urn:IPTV" introduced by the XML schema extension described above may be referred to, so that the ProgramInformation element of the original TV-Anytime metadata may be replaced with the ProgramInformation element 54 having the sipURI attribute newly introduced by the XML schema extension. In the sipURI attribute, SIP-URI generated using the CRID as the value of the programId attribute and the DNS name of the IPTV server 20 at the source of content distribution may be stored.

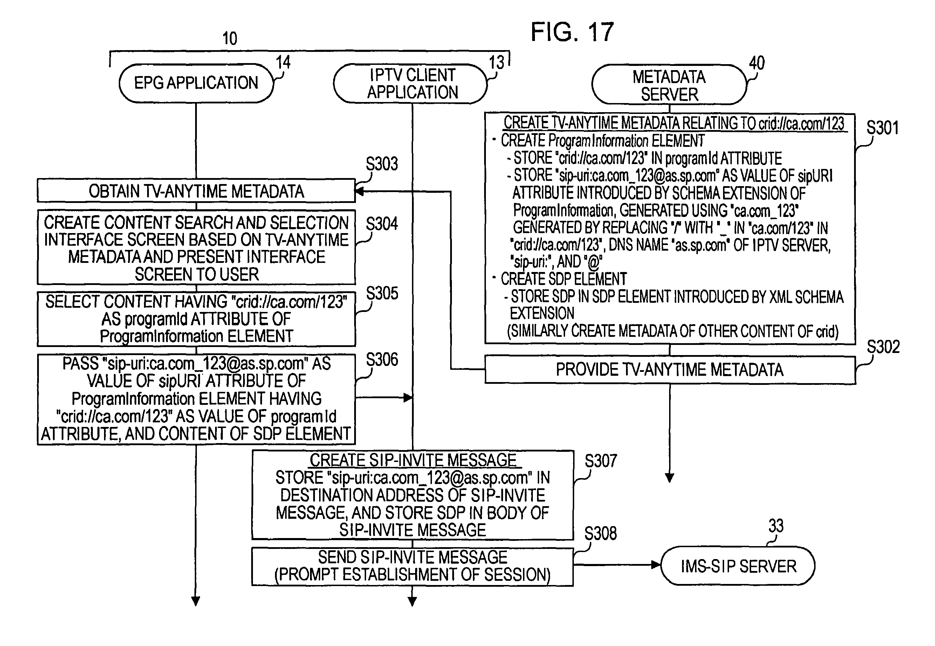

Fig. 17 shows an exemplary sequence from generation of the TV-Anytime metadata shown in Fig. 16 at the metadata server 40 to generation of an SIP-INVITE message at the IPTV client terminal 10.

The procedure of generating TV-Anytime metadata shown in Fig. 16 at the metadata server 40 is as follows. First, the metadata server 40 may store the CRID "crid://ca.com/123" that identifies content as a value of the programld attribute of the ProgramInformation element 54. Then, using "ca.com_123" generated by removing "crid://" from the CRID "crid://ca.com/123" and replacing "/" with "_", the DNS name "as.sp.com" of the IPTV server 20 at the source of content distribution, and further using "sip-uri:" and "@", the metadata server 40 may generate and store "sip-uri:ca.com_123@as.sp.com" as a value of the sipURI attribute newly introduced by the XML schema extension described above. In the TV-Anytime metadata, SDP used to establish an IPTV session for viewing the content may also be stored. The method of storing the SDP in TV-Anytime metadata may be the same as that described above.

The EPG application 14 of the IPTV client terminal 10 may send a request for obtaining metadata of content to the metadata server 40 via the network 3 to obtain TV-Anytime metadata from the metadata server 40 (step S303). Based on the content of one or more ProgramInformation elements 54 in the ProgramInformationTable element 52 in the TV-Anytime metadata obtained, the EPG application 14 may create a content searching and selecting interface screen including titles of content, and present the interface screen to the user 1 via the user interface 11 (step S304). Upon selecting a title of content desired by the user 1 using the interface screen, the EPG application 14 may extract the value of the programId attribute of the ProgramInformation element 54 having the title as the content of the Title element 56 (step S305). Content having the CRID "crid://ca.com/123" may be selected as content to be viewed.

Upon receiving information regarding the selection of content, from the TV-Anytime metadata, the EPG application 14 may pass "sip-uri:ca.com_123@as.sp.com," which is the value of the sipURI attribute of the ProgramInformation element 54 having "crid://ca.com/123" as the value of the programld attribute, and the content of SDP stored in an SDP element (not shown) to the IPTV client application 13 (step S306).

The IPTV client application 13 may store "sip-uri:ca.com_123@as.sp.com" passed from the EPG application 14 as SIP-URI in the destination address field of the SIP-INVITE message, and store the SDP in the body field of the SIP-INVITE message, thereby generating a SIP-INVITE message (step S307). The IPTV client application 13 may send the generated SIP-INVITE message to the IMS-SIP server 33 via the network 3 (step S308). The subsequent operation may be the same as that described with reference to Fig. 4.

Accordingly, it is possible to obtain SIP-URI to be stored in the destination address field of an SIP-INVITE message based on TV-Anytime metadata at the IPTV client terminal 10.

Embodiments consistent with the disclosure have been described with reference to the accompanying drawings. The foregoing description has been presented for purposes of illustration. It is not exhaustive and does not limit the invention to the precise forms or embodiments disclosed. Modifications and adaptations of the invention will be apparent to those skilled in the art from consideration of the specification and practice of the disclosed embodiments of the invention. For example, the described implementations include software, but systems and methods consistent with the disclosure may be implemented as a combination of hardware and software or in hardware alone. Examples of hardware include computing or processing systems, including personal computers, servers, laptops, mainframes, and microprocessors. Additionally, although aspects of the invention are described for being stored in memory, one skilled in the art will appreciate that these aspects can also be stored on other types of computer readable media, such as secondary storage devices, for example, hard disks, magnetic disks, optical disks, solid-state memory, or other forms of RAM or ROM.

Computer programs based on the written description and methods of this invention are within the skill of an experienced developer. The various programs or program modules can be created using any of the techniques known to one skilled in the art or can be designed in connection with existing software.

Moreover, while illustrative embodiments of the invention have been described herein, the scope of the invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. Further, the steps of the disclosed methods may be modified in any manner, including by reordering steps and/or inserting or deleting steps, without departing from the principles of the invention. It is intended, therefore, that the specification and examples be considered as exemplary only, with a true scope and spirit of the invention being indicated by the following claims and their full scope of equivalents.

## Claims

1. A content receiving client device, comprising:
metadata obtaining means for obtaining metadata including information used to generate an invite message for prompting establishment of a session for receiving content from a content distribution server;
message generating means for generating the invite message based on the metadata, the invite message including a destination address field storing location information specifying a location of the content and a body field storing information used to establish the session; and
message sending means for sending the invite message to a session control server that controls the session.

2. A content receiving method, comprising:
obtaining metadata including information used to generate an invite message for prompting establishment of a session for receiving content from a content distribution server;
generating the invite message based on the metadata, the invite message including a destination address field storing location information specifying a location of the content and a body field storing information used to establish the session; and
sending the invite message to a session control server that controls the session.

3. A content distribution system, comprising:
a content distribution server configured to distribute content;
a content receiving client device configured to establish a session for receiving the content with the content distribution server;
a session control server configured to control the session;
an access control server configured to control an access privilege for the content; and
a network resource management server configured to manage network resources used to established the session,
wherein the content receiving client device includes:
message obtaining means for obtaining metadata including information used to generate an invite message for prompting establishment of the session;
message generating means for generating the invite message based on the metadata, the invite message including a destination address field storing location information specifying a location of the content and a body field storing information used to establish the session; and
message sending means for sending the invite message to the session control server, and
wherein the session control server includes session controlling means for requesting the access control server to check the access privilege based on the destination address field and for requesting, upon receiving a grant of the access privilege, the network resource management server to allocate the network resources based on the body field.

4. A content distribution method, comprising:
obtaining metadata including information used to generate an invite message for prompting establishment of a session for receiving content;
generating the invite message based on the metadata, the invite message including a destination address field storing location information specifying a location of the content and a body field storing information used to establish the session;
sending the invite message to a session control server;
requesting an access control server to check an access privilege for the content based on the destination address field; and
requesting, upon receiving a grant of the access privilege, a network resource management server to allocate network resources used to establish the session based on the body field.

5. An IPTV client terminal, comprising:
metadata obtaining means for obtaining TV-Anytime metadata including information used to generate an SIP-INVITE message for prompting establishment of an IPTV session for viewing content over IMS;
message generating means for generating the SIP-INVITE message based on the TV-Anytime metadata, the SIP-INVITE message including a destination address field storing an SIP-URI specifying a location of the content and a body field storing an SDP describing a parameter used to establish the IPTV session; and
message sending means for sending the SIP-INVITE message to an IMS-SIP server that controls the IPTV session.

6. The IPTV client terminal of claim 5, wherein:
the TV-Anytime metadata includes:
a ProgramInformationTable element in which metadata relating to identification of the content can be stored;
a ProgramLocationTable element in which metadata relating to distribution of the content can be stored;
a ProgramInformation element provided for each item of content identified in the ProgramlnformationTable element, the ProgramInformation element storing a CRID identifying a corresponding content; and
an OnDemandProgram element provided for each item of content identified in the ProgramLocationTable element, the OnDemandProgram element storing the CRID as a value of a crid attribute and storing the SIP-URI, and
the message generating means stores the SIP-URI in the destination address field based on the ProgramInformation element.

7. The IPTV client terminal of claim 6, wherein:
the TV-Anytime metadata further includes:
an InstanceDescription element provided in the OnDemandProgram element, and
an SDP element storing the SDP introduced in the InstanceDescription element by an XML schema extension of original TV-Anytime metadata, and
the message generating means stores the SDP in the body field.

8. The IPTV client terminal of claim 7, wherein the TV-Anytime metadata further includes:
an AVAttributes element provided in the InstanceDescription element; and
a transportQuality element for storing a QoS parameter introduced in the AVAttributes element by the XML schema extension.

9. The IPTV client terminal of claim 8, wherein the TV-Anytime metadata further includes a VideoAttributes element provided in the AVAttributes element, the VideoAttributes element having a Coding element storing information regarding a codec as a child element the Coding element.

10. The IPTV client terminal of any one of claims 5 to 9, wherein:
the TV-Anytime metadata includes:
a ProgramInformationTable element in which metadata relating to identification of the content can be stored;
a ProgramLocationTable element in which metadata relating to distribution of the content can be stored;
a ServiceInformationTable element in which metadata of a service can be stored;
a ProgramInformation element provided for each item of content identified in the ProgramInformationTable element, the ProgramInformation element storing a CRID identifying a corresponding content;
a ServiceInformation element provided for each service in the ServiceInformationTable element, the ServiceInformation element storing an ID of a corresponding service as a value of a serviceld attribute and storing a URL of an IPTV server that provides the corresponding service, and
an OnDemandService element provided for the each item of content identified in the ProgramLocationTable element, the OnDemandService element storing the CRID as a value of a crid attribute and storing the ID as a value of a serviceIdRef attribute, and
the message generating means determines the OnDemandService element based on the ProgramInformation element, and stores, in the destination address field, the SIP-URI generated using the URL and the CRID.

11. The IPTV client terminal of any one of claims 5 to 11, wherein:
the TV-Anytime metadata includes:
a ProgramInformationTable element in which metadata relating to identification of the content can be stored, and
a ProgramInformation element provided for each item of content identified in the ProgramInformationTable element, the ProgramInformation element storing a CRID identifying a corresponding content as a value of a programld attribute, and storing an SIP-URI specifying a location of the corresponding content as a value of an sipURI attribute introduced by an XML schema extension of original TV-Anytime metadata, and
the message generating means stores the SIP-URI in the destination address field based on the CRID.

12. A method of generating an SIP-INVITE message for prompting establishment of an IPTV session for viewing content at a client terminal over IMS, the method comprising:
obtaining TV-Anytime metadata including information used to generate the SIP-INVITE message; and
generating the SIP-INVITE message based on the TV-Anytime metadata, the SIP-INVITE message including a destination address field storing an SIP-URI specifying a location of the content and a body field storing an SDP describing a parameter used to establish the IPTV session.

13. An IPTV system, comprising:
an IPTV server configured to distribute content;
an IPTV client terminal configured to establish an IPTV session over IMS with the IPTV server to allow viewing of the content;
an IMS-SIP server configured to control the IPTV session;
an access control server configured to control an access privilege for the content; and
a network resource management server configured to manage network resources used to establish the IPTV session,
wherein the IPTV client terminal includes:
metadata obtaining means for obtaining TV-Anytime metadata including information used to generate an SIP-INVITE message for prompting establishment of the I PTV session;
message generating means for generating the SIP-INVITE message based on the TV-Anytime metadata, the SIP-INVITE message including a destination address field storing an SIP-URI specifying a location of the content and a body field storing an SDP describing a parameter used to establish the IPTV session; and
message sending means for sending the SIP-INVITE message to the IMS-SIP server,
wherein the IMS-SIP server includes session controlling means for requesting the access control server to check the access privilege content based on the destination address field, and for requesting, upon receiving a grant of the access privilege, the network resource management server to allocate the network resources based on the SDP.

14. An IPTV session controlling method of an IPTV system including an IPTV server configured to distribute content, an IPTV client terminal configured to establish an IPTV session over IMS with the IPTV server to allow viewing of the content, an IMS-SIP server configured to control the IPTV session over IMS, an access control server configured to control an access privilege for the content, and a network resource management server configured to manage network resources used to establish the IPTV session, the IPTV session controlling method comprising:
obtaining TV-Anytime metadata including information used to generate an SIP-INVITE message for prompting establishment of the IPTV session;
generating the SIP-INVITE message based on the TV-Anytime metadata, the SIP-INVITE message including a destination address field storing an SIP-URI specifying a location of the content and a body field storing an SDP describing a parameter used to establish the IPTV session;
sending the SIP-INVITE message to the IMS-SIP server;
requesting the access control server to check the access privilege based on the destination address field; and
requesting, upon receiving a grant of the access privilege from the access control server, the network resource management server to allocate the network resources based on the SDP.

15. A computer program capable on execution by an IPTV client terminal of causing the IPTV client terminal to perform a method, the method comprising:
obtaining TV-Anytime metadata including information used to generate an SIP-INVITE message for prompting establishment of an IPTV session over IMS for viewing content;
generating the SIP-INVITE message based on the TV-Anytime metadata, the SIP-INVITE message including a destination address field storing an SIP-URI specifying a location of the content and a body field storing an SDP describing a parameter used to establish the IPTV session; and
sending the SIP-INVITE message to an IMS-SIP server that controls the IPTV session.
